# EUROPEAN PATENT APPLICATION

(11) **EP 2 554 880 A1**
(43) Date of publication of application: **06.02.2013**
(21) Application number: 11759276.6
(22) Date of filing: 16.03.2011
(51) Int. Cl.: F16J 15/34

(54) **MECHANICAL SEALING DEVICE**

(30) Priority: 26.03.2010 JP 2010072663
(71) Applicant: Eagle Industry Co., Ltd., Minato-ku Tokyo 105-8587 (JP)
(72) Inventor: SUEFUJI, Yoshihiro, Tokyo 105-8587 (JP)
(74) Representative: Isarpatent
(86) International application number: PCT/JP2011/056194
(87) International publication number: WO 2011/118470

(57) **Abstract**

The object of the present invention is to provide a divisional type mechanical seal of outside type which joins the seal face in flat and strongly even in a seal ring having a different thickness in the radial direction, and to exhibit an appropriate sealing ability. In the mechanical seal device of the present invention, the circumference grooves 31 to 34 and 71 to 74 are formed in correspondence with the thicker area 38 and 78 and the thinner area 39 and 79 at the outer peripheral face of the seal ring 30, 70; and the circumference grooves 51 to 54 and 91 to 94 are formed in correspondence with the circumference direction grooves 31 to 34 and 71 to 74 at the inner peripheral face of the holder 50 and 90. By placing the O rings 41 to 44 and 81 to 84 in between the circumference grooves 31 to 34 and 71 to 74 of the seal ring 30 and 70, and the circumference grooves 51 to 54 and 91 to 94 of the holder 50 and 90, the holder having a ring shape of which the divisional parts of each holder is joined by the bolts 55, 95 and 56 and 96 respectively corresponding to the thicker area 38, 78 and thinner area 39, 79; each divisional parts of the divided seal ring can be strongly joined and the each seal ring 30 and 70 are formed in ring shape.

## Description

### TECHNICAL FIELD

The present invention relates to a mechanical seal device, and particularly to a divisional type and outside type mechanical seal device.

### BACKGROUND ART

Conventionally, as for the mechanical seal used in a fluid transport machine (the transport device), when the transport machine is large, exchange process took too much time and was also costly. Thus, the structure was proposed which enables to divide the mechanical seal so that it can be exchanged without disassembling the transport machine, which is already in practical use (for example, refer to Fig.1 of PCT publication WO2007/136453 (Patent document 1)).

In regards with the divisional type mechanical seal, generally, when a pressure of a sealing fluid is applied to the inner diameter side of the seal ring which cannot be fixed by the bolts or so, the pressure thereof acts in a direction to open dividing faces of the sealing ring, which causes the sealing fluid to easily leak from the dividing faces. Therefore, in many cases, the conventional divisional type mechanical seal is constituted as an inside type mechanical seal that the pressure is applied to the outer diameter side of the seal ring.

However, as for the mechanical seal of the inside type, the sealing fluid is present at the outside of the seal ring, thus a seal cover is necessary, which causes the problem that the constitution of the whole seal device becomes complicated. Therefore, there is a demand to realize the divisional type mechanical seal in the mechanical seal of the outside type. Further, in order for that, the dividing faces need to be fixed and connected so that the dividing faces do not open the divided seal ring; and there are various methods proposed therefor.

For example, the method of fixing the divisional seal ring with the fastening ring made of divided metals is proposed (for example refer to Japanese Patent Application Laid Open 2003-166651 (Patent document 2)). However in this method, due to the difference of the heat expansion coefficient between the fastening ring made of metals and the seal ring (generally, the heat expansion coefficient of the metals are larger than that of the sealing ring), either one of the fastening ring or the seal ring, or both of those may be deformed or loosened. If the fastening ring or the seal ring is deformed or loosened, it is highly likely that the dividing faces of the seal ring open.

Also, the method of fixing the seal ring by closely contacting the dividing faces by placing the elastic member at the tilted outside face (having an angle in a predetermined direction) of the seal ring, is proposed (for example, refer to Japanese Patent Application Laid Open 2007-298123 (Patent document 3)). However, in this method, when the deformation to the seal ring is caused by the heat or pressure, the dividing faces in parts where the elasticity of the elastic member does not reach may open. Particularly, when the seal ring does not have a form of a ring shape of a simple rectangular cross section, the deformation may be caused due to the difference of the thickness between the thinner portion and the thicker portion; however in such method it cannot handle such deformation.

Also, the method of introducing the elastic member to the side face of the seal ring is proposed as well (for example, refer to Japanese Patent Application Laid Open 2006-291988 (patent document 4)). However, this is a method in which the dividing faces of the seal ring are pressed by the tension force of the elastic body provided at a portion in the axial direction of the outer peripheral of the seal ring; therefore it can only deal with the seal ring having a simple shape like cylinder. Also, as it only comprises the elastic means at the outer peripheral face, it cannot deal with the displacement of the dividing faces in the axial direction.
Note that, in this method which is disclosed in Japanese Patent Application Laid Open 2006-291988, the holder at the outer peripheral of the elastic member is not the divisional member, and it is provided by introducing in between the stationary seal ring and the holder by using the initial interference of the elastic body.

Also, the method of covering the entire outer side of the seal ring and the backside of the seal ring (the opposite of the seal face) by the elastic member and fixing the circumference thereof by the divided fixing ring is proposed as well (for example, refer to Japanese Patent Application Laid Open H07-071617 (patent document 5)). According to this method, it can deal with the deformation in the radial direction of the seal ring, or to the displacement in the axial direction. However, such elastic member having a shape which covers the entire peripheral face of the seal ring basically needs to be prepared for each seal ring due to the difference of the diameter of the seal ring or so, thus the production cost becomes high, and as a result the price as the specialized parts becomes expensive. Also, it becomes complicated to manage the parts. Moreover, further specifically, it is necessary to produce a specialized mold in order to produce such a specialized elastic member, and the management of the mold is too much of a work.

Patent document 1: PCT International Publication WO2007/13645
Patent document 2: Japanese Patent Application Laid Open 2003-166651
Patent document 3: Japanese Patent Application Laid Open 2007-298123
Patent document 4: Japanese Patent Application Laid Open 2006-291988
Patent document 5: Japanese Patent Application Laid Open H07-071617

### DISCLOSURE OF THE INVENTION

### TECHNICAL PROBLEMS TO BE SOLVED BY THE INVENTION

The present invention was accomplished by reflecting such problems, and its object is to provide a divisional type mechanical seal device of an outside type, capable of maintaining the connecting part of the seal face always accurately in flat even in the seal ring having a complicated shape such as those having a portion with different thickness in the radial direction, and also capable to exhibit a appropriate sealing ability, while the constitution is simple and inexpensive.

### MEANS FOR SOLVING THE TECHNICAL PROBLEMS

In order to solve the above objects, the mechanical seal of the present invention is a divisional type mechanical seal device of outside type comprising a stationary seal ring and a rotational seal ring; wherein at least one of said stationary seal ring and said rotational seal ring is a seal ring having a cross sectional shape changing a radial direction thickness in the axial direction, said mechanical seal device comprises one or more O rings placed at an outer peripheral face of each area in the axial direction having different thickness in the radial direction of the seal ring having a different thickness in said radial direction, and a holder placed at outer peripheral of said seal ring where said O ring is placed and presses said seal ring to a radial direction inner side via said O ring.

According to the mechanical seal device of the present invention having such constitution, the O ring is placed so that it corresponds to the portion having a different radial direction thickness of the seal ring thereby the seal ring is pressed from the outside; thus even if the seal ring undergoes complicated deformation due to the difference of the thickness in the radial direction, the O ring placed at each parts (area) can provide an appropriate tension force to the portion (area) thereof, and can appropriately suppress or prevent the deformation. As a result, the connecting part of the seal face is always maintained accurately in flat, maintain the divisional type mechanical seal appropriately in a ring form, and can exhibit the appropriate sealing ability. Also, the mechanical seal device which is inexpensive and having simple constitution can be provided.

Preferably, the mechanical seal device as set forth in claim 1, wherein said holder is a divisional type holder divided into plurality of divisional parts along the circumference direction, and connecting means to form said holder by sequentially joining said divisional parts are placed one or more at an outer peripheral side of said each area in the axial direction having a different thickness in the radial direction of the seal ring having a different thickness in said radial direction.

According to the mechanical seal of the present invention having such constitution, even when joining the dividing faces of the divisional type holder, it is fasten by the individual fastening bolts against the portion having a different thickness in the radial direction of the seal ring, thus further appropriate tension force can be provided by each portion (area) to the deformation caused by the difference of the thickness in the radial direction of the seal ring, and also the seal ring can be maintained in a ring shape appropriately. As a result, the connecting part of the seal face can be always maintained accurately in flat, the divisional type mechanical seal is maintained in ring form appropriately, and can exhibit a appropriate sealing ability.

Also, suitably, said holder is a divisional type divided into plurality of divisional parts, and under a condition that said holder is sequentially joined by a connecting means, a space controllable by said connecting means are formed in between said divisional parts.

According to the mechanical seal of the present invention having such constitution, at the dividing faces of the divisional holder, the end faces of each divisional parts do not contact closely against each other, thus it is joined so that a slight space is formed therebetween, thereby due to the fastening force of the connecting means of the fastening bolts or so, the pressing force and the tension force acting on the outer peripheral of the seal ring placed at the inner peripheral side can be controlled. As a result, the connecting part of the seal face can be maintained always accurately in flat, and the divisional type mechanical seal is maintained in ring form appropriately, and can exhibit an appropriate sealing ability.

Also suitably, in the mechanical seal of the present invention, one or more of circumference grooves having an arc shape cross section are formed at an outer peripheral of said each area in the axial direction having different thickness in the radial direction of the seal ring changing the thickness in radial direction, and one or more O ring placed at said each area are placed by fitting to said circumference direction grooves.

According to the mechanical seal device of the present invention having such constitution, the contacting area between the outer peripheral of the seal ring and the O ring is increased and the compression force acting on the O ring can be reflected to the tension force in full extent, further it also enables to make the O ring and the seal ring as an one body in the axial direction. As a result, the axial direction position of the seal ring can be appropriately controlled by a simple constitution, and also it can be maintained strongly in a condition that the dividing faces are joined, further even if the sealing fluid is a high pressure fluid or so, an appropriate sealing ability can be exhibited.

Also suitably, in the mechanical seal device of the present invention, at inner peripheral face of said holder, one or more circumference grooves having a arc shape cross section are formed at an area corresponding to an outer peripheral of an area in the axial direction having different thickness in an radial direction of seal ring having different thickness in said radial direction, and one ore more O rings placed at each said area are placed by fitting to said circumference grooves.

According to mechanical seal device of the present invention having such constitution, the seal ring and the holder is further secured as an one body via the O ring, thus the pressing force from the holder can be reflected to the tension force in full extent, and also the holder and the seal ring can be made into one body in both the axial direction and the circumference direction. As a result, the axial direction position and the circumference direction position of the seal ring can be further appropriately controlled, and also the condition in which the dividing faces are joined can be maintained strongly, further even if the sealing fluid is a high pressure fluid, an appropriate sealing ability can be exhibited.

### BRIEF DESCRIPTION OF THE DRAWINGS

[FIG. 1] FIG. 1 is a figure showing the constitution of the mechanical seal device of one embodiment of the present invention.
[FIG. 2] FIG. 2 is an enlarged view of the surrounding of the stationary ring (seal ring) and the rotational ring (mating ring) of the mechanical seal shown in Fig.1.
[FIG. 3] FIG. 3 is a cross sectional figure in the axial direction at X postion of Fig.1.
[FIG. 4] FIG. 4 is a front view of a collar of the mechanical seal device shown in Fig.1.
[FIG. 5] FIG. 5 is a figure showing the constitution of the mechanical seal device of which the flange is divided as other embodiment of the present invention.
[FIG. 6] FIG. 6 is a cross sectional view in the axial direction at X position of Fig.5.

### BEST MODE FOR CARRYING OUT THE INVENTION

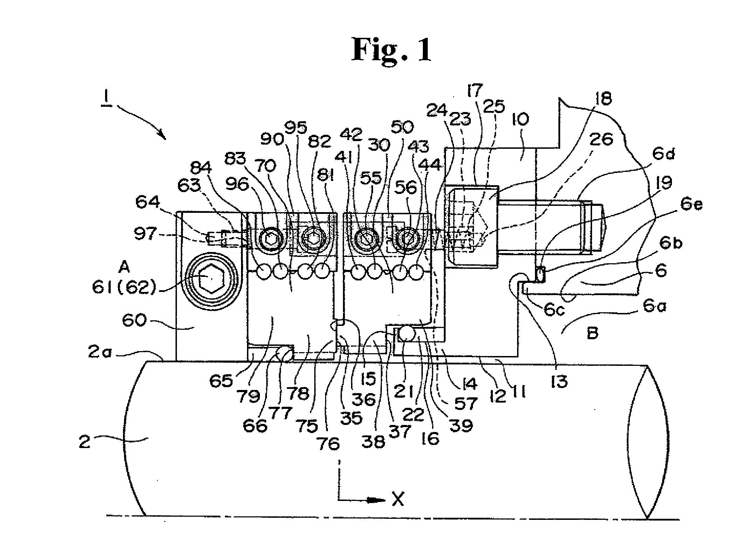

The mechanical seal device of one embodiment of the present invention will be described by referring to Fig.1 to Fig.4.

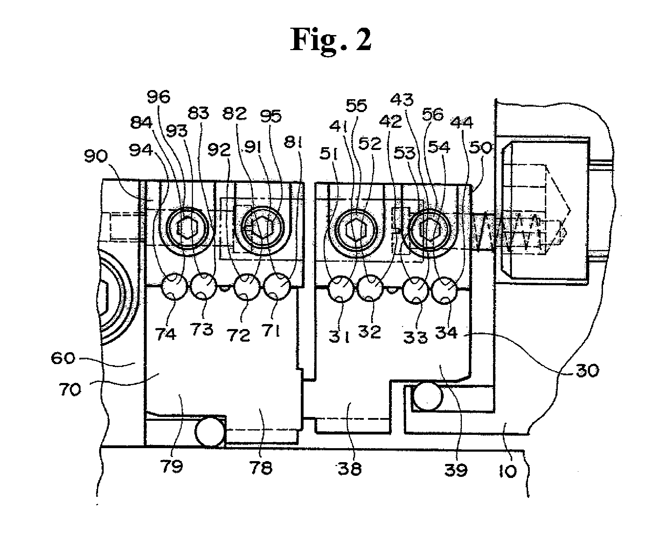

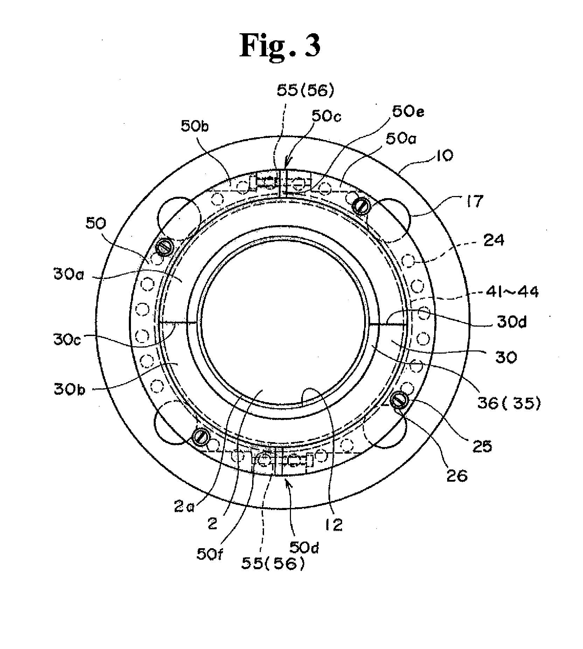

Fig.1 shows a cross sectional figure in the axial direction showing the constitution of the mechanical seal device of the present embodiment, and Fig.2 is an enlarged view nearby the stationary ring (seal ring) 30 and the rotational ring (mating ring) 70 of the mechanical seal device 1. Fig.3 is a cross sectional figure in the axial direction at X position of Fig.1, and Fig,4 is a front view figure of a collar 60 of the mechanical seal device shown in Fig.1.

The mechanical seal device 1 of the present embodiment is a divisional type mechanical seal of the outside type. As shown in Fig.1, the mechanical seal device 1 comprises, as main constitutional parts, a flange 10, a stationary ring (seal ring) 30, O rings 41 to 44, a stationary ring fixing holder 50, a collar 60, a rotational ring (mating ring) 70, O rings 81 to 84, and a rotational ring fixing holder 90.

The mechanical seal device 1 is mounted at the place where the opening 6a is formed through which the rotational axis 2 of the casing 6 penetrates, and the inner peripheral face 6b of the opening 6a of the casing 6 and the outer peripheral face 2a of the rotational axis 2 are sealed.
Note that, in Fig.1, the outer space of the mechanical seal device 1 which is the left side of the figure is the machine outer side (atmosphere side) space A, and the space of the inner side of the opening 6a of the casing 6 which is the right side of the figure, is the machine inner side space B.

The flange 10 is a member which is the base to mount the mechanical seal device 1 to the casing 6, and is a member which is circular ring form formed with the opening 11 having a circle shape for penetrating the rotational axis 2 in the center.

At the face of the machine inner side (casing 6 side) of the flange 10, the step part 13 is formed, and ridges are formed at the outer peripheral side across the step part 13 and grooves are formed at the inner peripheral side taking the step part 13 as a border. When mounting the flange 10 to the casing 6, the ridged shape edge part 6c formed in a ring shape at the outside (machine outer side) end part of the opening 6a of the casing 6 is fitted, along the step part 13, to the groove part of the inner peripheral side of the step part 13. Thereby, the position of the flange 10 is defined against the opening 6a of the casing 6. In such condition, the inner peripheral face 12 of the opening 11 of the flange 10 and the inner peripheral face 6b of the opening 6a of the casing 6 are placed at the same axis so that the rotational axis 2 can penetrate to the inside. The inner peripheral face 12 of the opening 11 of the flange 10 is placed at the position closely in contact with the outer peripheral face 2a of the rotational axis 2 than inner peripheral face 6b of the opening 6a of the casing 6, and is formed so that it faces with the outer peripheral face 2a of the rotational axis 2 with slight space.

At the face of the machine outer side of the flange 10, the edge part of the opening 11 of the flange 10 forms the tube shape part 14 by extending in the axial direction. The inner peripheral face of the tube shape part 14 is formed so that it is continuous with the inner peripheral 12 in a same radius with the inner peripheral face 12 of the above mentioned flange 10. Hereinafter the range including the range which becomes the inner peripheral of the tube shape part 14 will be referred as the inner peripheral face 12 of the flange 10.

At the tip part (the machine outside end portion) of the tube shape part 14, the edge part 15 projecting out in a ring form to the radial direction outer side is formed, and the ring shape groove 16 having a groove shape is formed at the outer peripheral face of the tube shape part 14 by this edge part 15. That is, the outer peripheral face of the tube shape part 14 is formed at the ring shape groove 16 having a groove shape sandwiched between the machine inner side face of the edge part 15 and the machine outer side face of the flange 10. To this ring shape groove 16, an adaptor 22 made of resin is placed for holding the O ring 21 and O ring 21 at the machine outer side end part of the ring shape groove 16. Then, as descried in the following, the inner peripheral face of the thinner area (the second area) of the stationary ring 30 is fitted to this ring shape groove 16, and the stationary ring 30 is provided to the flange 10 so that the stationary ring 30 is movable in the axial direction.

At the flange 10, the bolt hole 17 is formed at the position corresponding to the screw hole 6d formed at the casing 6. In the present embodiment, the four bolt holes 17 in the present embodiment are formed by equally distributing along the circumference direction of the flange 10. At the casing 6, the screw holes 6d are formed respectively to the position corresponding to the bolt holes 17. The casing 6 is mounted to the flange 10 by introducing the hexagonal bolt 18 with a hole to the bolt hole 17 and screwing to the screw hole 6d of the casing 6.

Also, at the outer peripheral side of the projecting edge part 6c of the casing 6, the groove 6e for placing the O ring is formed. When mounting the flange 10 to the casing 6, the O ring 19 made of rubber or a resin is provided to this groove 6e, and the flange 10 is provided to the casing 6 by the hexagonal bolt 18 with a hole. Thereby, the space between the flange 10 and the casing 6 is sealed.

Also, at the machine outer side end face of the flange 10, the spring attachment hole 23 provided with the spring seat at the bottom face is formed, and one end of the coil spring 24 is inserted into this spring attachment hole 23 and seated on the spring seat. Then, other end of the coil spring 24 is in contact with the machine inner side end face of the stationary ring fixing holder 50, thereby the stationary ring fixing holder 50 and the stationary ring 30 which is movable in the axial direction together as one body with the stationary ring fixing holder 50, as described in the below, are elastically pressed to the rotational ring (mating ring) 70 direction. Note that, in the mechanical seal device 1 of the present embodiment, as shown in Fig.3, the spring attachment hole 23 and the coil spring 24 are placed in 24 places respectively along the circumference direction of the flange 10.

Also, at the machine outer side end face of the flange 10, a whirl-stop pin attachment hole 25 is formed, and the tip part of the whirl-stop pin 26, which is mounted to the stationary ring fixing holder 50, is fitted by inserting to the whirl-stop pin attachment hole 25. Thereby, the stationary ring fixing holder 50, and the stationary ring 30 which is made in one body with the stationary ring fixing holder 50 in the circumference direction is fixed to the flange 10 so that it does not move together with the rotation of the rotational ring (mating ring) 70 in the circumference direction. Note that, in the mechanical seal device 1 of the present embodiment, as shown in Fig.3, the whirl-stop pin attachment hole 25 and the whirl-stop pin 26 are provided at 4 places respectively in equal distribution along the circumference direction of the flange 10.

The stationary ring (seal ring) 30 is placed at the machine outer side of the flange 10, the seal face 36 of the seal portion 35 formed at the machine outer side end face slides in close contact with the seal face 76 of the seal part 75 of the rotational ring (mating ring) 70 which is placed by facing against thereto, and thereby the inner peripheral side and the outer peripheral side of the seal face 36 and 76 are sealed, that is the machine outer side space A and the machine inner side space B are sealed.

The stationary ring 30 is, as shown in Fig.3, a ring shape member having an opening which allows the rotational axis 2 to penetrate through into the inside, and is a divisional type seal ring divided in two parts in the circumference direction. That is, the stationary ring 30 comprises the stationary ring first divisional part 30a and the stationary ring second divisional part 30b, and these are connected by contacting each end faces at the dividing faces 30c and 30d, thereby the stationary ring 30 having the complete circular ring shape is formed. Note that, the dividing faces 30c and 30d of the stationary ring 30 is formed at the position off set by 90 degrees angles from the dividing faces 50c and 50d of the stationary ring fixing holder 50 which will be explained in below.

The stationary ring 30 is a ring shape member having a cross section of roughly L shape. That is, it is not a seal ring having a simple cross section such as a rectangular shape or so, but it is a seal ring having the constitution in which the portions with different thickness in the radial direction are aligned in the axial direction. Further specifically, the stationary ring 30 comprises the step part 37 at the approximate center in the axial direction of the inner peripheral direction, and the machine outer side of the step part 37 is formed at the thicker area (the first area) 38 of which the center opening is thick and small diameter, further the machine inner side of the step part 37 is formed at the thinner area (the second area) 39 of which the center opening is thin and large diameter.

The inner peripheral face of the thicker area (the first area) 38 of the stationary ring 30 is placed at the position closely in contact with the outer peripheral face 2a of the rotational axis 2 by approximately the same space as the inner peripheral face 12 of the flange 10. The inner peripheral face of the thinner area (the second area) 39 of the stationary ring 30 is fitted to the ring shape groove 16 of the flange 10 via the O ring 21. Thereby, the stationary ring 30 is mounted to the flange 10 in a movable manner in the axial direction.

At the machine outer side end face of the stationary ring 30, the stationary side seal part 35 is formed of which a part of the inner peripheral side is formed in a ridged form along the circumference direction in a predetermined width, and the end face thereof is formed at the stationary side seal face 36. The seal face 36 closely contacts and slide against the seal face 76 of the rotational ring 70 which is placed by opposing the seal face 36, and thereby the inner peripheral side and the outer peripheral side thereof are sealed.
Note that, the stationary ring 30 is formed by silicon carbide and carbon material.

The outer peripheral face of the stationary ring 30 is formed with four circumference direction grooves 31 to 34 (the stationary ring first circumference direction groove 31 to stationary ring forth circumference direction 34) having the arc shape cross section for placing the O ring. As for the stationary ring first circumference direction groove 31 to 34, the two circumference direction grooves of the stationary ring first circumference direction groove 31 and the stationary ring second circumference direction groove 32 are formed at the thicker area (the first area) 38 of the stationary ring 30; and the two circumference direction grooves of the stationary ring third circumference direction groove 33 and the stationary ring fourth circumference direction groove 34 are formed at the thinner area (the second area) 39 of the stationary ring 30.

At each circumference direction grooves 31 to 34, O rings 41 to 44 made of rubber or the resin are placed. That is, the stationary ring first O ring 41 is placed at the stationary ring first circumference direction groove 31; the stationary ring second O ring 42 is placed at the stationary ring second circumference direction groove 32, the stationary ring third O ring 43 is placed at the stationary ring third circumference direction groove 33, and the stationary ring fourth O ring 44 is placed at the stationary ring fourth circumference direction groove 34.
For the O rings 41 to 44, O ring of normal size are used for all of them. In other words, the size and the shape of the stationary ring first circumference direction groove 31 to stationary ring fourth circumference direction groove 34 of the outer peripheral of the stationary ring 30 are defined so that normal size O rings can be used as the stationary ring first O ring 41 to stationary ring fourth O ring 44.

At the further outer peripheral of the stationary ring 30 in which the stationary ring first O ring 41 to the stationary ring fourth O ring 44 are placed, the stationary ring fixing holder 50 is provided.
The stationary ring fixing holder 50 is a circular ring shape member which the inner diameter is approximately equivalent to the outer diameter of the stationary ring 30. The stationary ring fixing holder 50, as shown in Fig.3, is a divisional type stationary ring fixing holder which is divided into two in the circumference direction. That is, the stationary ring fixing holder 50 comprises the stationary ring holder first divisional part 50a and the stationary ring holder second divisional portion 50b; and by joining these with the fastening bolt 55 and 56 at the place the dividing faces 50c and 50d, thereby the stationary ring fixing holder 50 having a circular ring shape is formed.
Note that, the dividing faces 50c, 50d of the stationary ring fixing holder 50 is formed at the position off set by 90 degrees angle from the dividing faces 30c, 30d of the stationary ring 30 as described in above.

At the inner peripheral of the stationary ring fixing holder 50, four circumference direction grooves having an arc shape cross section which are the stationary ring holder first circumference direction groove 51 to stationary ring fixing holder fourth circumference direction groove 54 are formed at the position corresponding to the stationary ring first circumference direction groove 31 to stationary ring fourth circumference direction groove 34 of the stationary ring 30. The stationary ring holder first circumference direction groove 51 to stationary ring fixing holder fourth circumference direction groove 54 houses approximately half of the outer peripheral side of the stationary ring first O ring 41 to the stationary ring fourth O ring 44 placed at the stationary ring first circumference direction groove 31 to stationary ring fourth circumference direction groove 34 of the stationary ring 30; and also the stationary ring first O ring 41 to the stationary ring fourth O ring 44 are pressed from the outer peripheral part. Thereby, a strong pressing force acts from the outer peripheral side against the stationary ring 30, and the dividing faces of the stationary ring first divisional part 30a and the stationary ring second divisional part 30b of the stationary ring 30 are closely in contact strongly. As a result, the stationary ring 30 having the complete circular ring form of which the stationary ring first divisional part 30a and the stationary ring second divisional part 30b are formed as one body can be maintained.

As such, by joining the stationary ring 30 and the stationary ring fixing holder 50 as one body by each circumference direction grooves 31 to 34, 51 to 54 formed in a arc shape cross section and the O rings 41 to 44 placed thereto, each contact area of the O rings 41 to 44 and the stationary ring 30 and the stationary ring fixing holder 50 can be increased; thus as a result, the compression force applied to the stationary ring fixing holder 50 can be suitably reflected and transferred as the tension force in full extent.
Also, by joining the stationary ring 30 and the stationary ring fixing holder 50 as one body in such embodiment, these can be made into a constitution also movable as one body in the axial direction, and the axial direction of the stationary ring can be defined without providing different system.

Also, the circumference direction groove of the stationary ring 30 and the stationary ring fixing holder 50 are formed at least one, and preferably two or more at each portion having different thickness in the radial direction of the stationary ring 30. Therefore, the O ring placed in between the stationary ring 30 and the stationary ring fixing holder 50 is also placed at least one, preferably two or more at each portion having different thickness in the radial direction of the stationary ring 30. In the mechanical seal device 1 of the present embodiment, each two of the circumference direction grooves 31, 32 of the stationary ring 30 and the circumference direction grooves 51, 52 of the stationary ring fixing holder 50, and the circumference direction grooves 33, 34 of the stationary ring 30 and the circumference direction grooves 53, 54 of the stationary ring fixing holder 50 are formed corresponding to the thicker area (the first area) 38 and the thinner area (the second area) 39 having a different thickness in the radial direction of the stationary ring 30. Also, each two of the O rings 41, 42 and 43, 44 are placed at each surrounding of the thicker area (the first area) 38 and the thinner area (the second area) 39 having a different thickness in the radial direction of the stationary ring 30.

By forming the circumference direction grooves to the stationary ring 30 and the stationary ring fixing holder 50 so that these corresponds with the portion having different thickness in the radial direction of the stationary ring 30 and by placing the O rings therebetween, even when the stationary ring 30 is complicatedly deformed due to the different thickness in the radial direction, the O ring placed at each portion (area) can provide a suitable tension force to the portion (area) thereof, and can suitably suppress or prevent the deformation.

Also, the fastening bolts 55 and 56 which joins the stationary ring holder first divisional part 50a and the stationary ring holder second divisional part 50b are used at least one, and preferably at two or more places at each portions (area) having different thickness in the radial direction of the stationary ring 30. In the mechanical seal device 1 of the present embodiment, the first fastening bolt 55 and the second fastening bolt 56 of each places are used by corresponding to the thicker area (the first area) 38 and the thinner area (the second area) 39 having different thickness in the radial direction of the stationary ring 30. Note that, the number of places referred herein is the number of axial direction position of the fastening bolt used, and it is not the number of the bolts. At each places, the number of bolts necessary for sequentially joining the divisional part of the divisional number thereof are used in correspondence with the divisional number (in the present embodiment it is 2) of the stationary ring fixing holder 50.

By joining each divisional part 50a and 50b of the stationary ring fixing holder 50 by the each independent fastening bolt 55, 56 at the place corresponding to the different thickness in the radial direction of the stationary ring 30, a suitable tension force can be applied to each portion (area) against the deformation due to the different thickness in the radial direction of the stationary ring 30, and thus the stationary ring 30 can be maintained appropriately in a ring form.

Also, in the stationary ring fixing holder 50 of the mechanical seal device 1 of the present embodiment, each end face of the stationary ring holder first divisional part 50a and the stationary ring holder second divisional part 50b are not in close contact at the dividing faces 50c and 50d; and as shown in Fig.3, it is joined so that slight space 50e and 50f are formed. In other words, the circumference direction length of the stationary ring holder first divisional part 50a and the stationary ring holder second divisional part 50d are defined so that such space 50e and 50f are formed. By having such constitution, due to each bolt fastening force of the fastening bolt 55, 56, the pressing force and the tension force acting on the outer peripheral of the stationary ring 30 can be controlled.

At the stationary ring fixing holder 50, the whirl-stop pin attachment hole 57, to which the whirl-stop pin 26 is inserted, is formed as mentioned in above. The tip part of the of the whirl-stop pin 26 inserted in the whirl-stop pin attachment hole 57 is fitted by inserting into the whirl-stop pin attachment hole 25 formed at the machine outer side end face of the flange 10. Thereby, the stationary ring fixing holder 50 and the stationary ring 30 made as one body with the stationary ring fixing holder 50 is fixed against the flange 10 in the circumference direction.

Also, at the machine inner side end face of the stationary ring fixing holder 50, other end of the coil spring 24 provided at the machine outer side end face of the flange 10 contacts thereto, as mentioned in above. Thereby, the stationary ring fixing holder 50 and the stationary ring 30 which is one body as the stationary ring fixing holder 50 is elastically pressed to the axial direction machine outer side (the rotational ring 70 direction) in the axial direction.

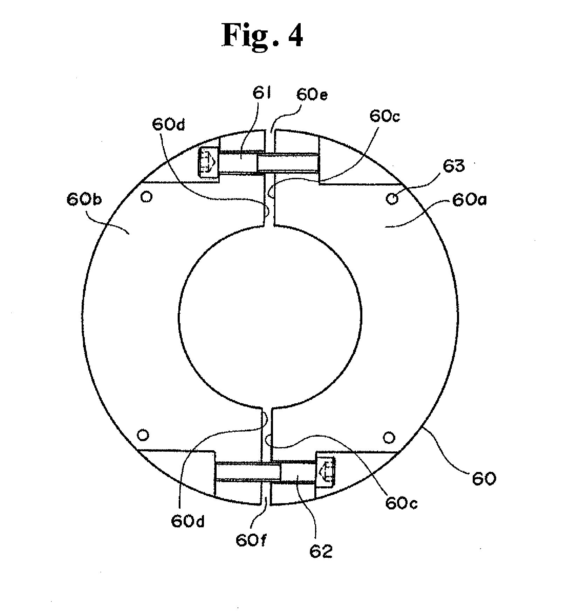

At the rotational axis 2, the collar 60 is provided so that it is rotatable with the rotational axis 2 as one body. The collar 60 is a member of the machine outest side of the mechanical seal device 1.
The collar 60 is, as shown in Fig.4, a divisional type collar which is divided into two in the circumference direction. That is, the collar 60 comprises the collar first divisional part 60a and the collar second divisional part 60b, ad these are joined to the fastening bolts 61, 62 by facing the dividing faces 60c, 60d to form the collar 60 having the circular ring shape; and fitted to the outer peripheral face 2a of the rotational axis 2 so that it is rotatable with the rotational axis 2 as a one body.

In between the collar first divisional part 60a and the collar second divisional part 60d under the situation that these are fasten by the fastening bolt 61, 62, a slight space 60e, 60f are formed. By controlling the fastening force of the fastening bolt 61, 62 by such constitution, the pressure force for fitting to the rotational axis 2 can be controlled.

At the machine inner side end face of the collar 60, the whirl-stop pin attachment hole 63 is formed, as shown in Fig.1 and Fig.4. The tip part of the whirl-stop pin 64 is inserted from the rotational ring fixing holder 90, which will be described in below, to the whirl-stop pin attachment hole 63, thereby the rotational ring fixing holder 90 is made rotatable with the collar 60 as one body, that is with the rotational axis 2. Also, thereby, the rotational ring (mating ring) 70 which is one body as the rotational ring fixing holder 90, is made rotatable with the rotational axis 2 as one body. Note that, in the mechanical seal device 1 of the present embodiment, as shown in Fig.4, the whirl-stop pin attachment hole 63 and the whirl-stop pin 64 are placed at four places respectively by equally distributing along the circumference direction of the collar 60 and the rotational ring fixing holder 90.

Also, at the outer peripheral face 2a of the rotational aixs 2 of the machine inner side of the collar 60, the O ring 66 for sealing between the rotational ring (mating ring) 70 and the outer peripheral face 2a of the rotational axis 2, and the adaptor 65 made of resin for defining the position of the O ring 66 are provided.

The rotational ring (mating ring) 70 is provided at the machine inner side of the collar 60, and slides in close contact with the seal face 36 of the seal part 35 of the stationary ring (seal ring) 30 in which the seal face 76 of the seal part 75 formed at the machine inner side end face are placed by opposing thereto; thereby the outer peripheral side and the inner peripheral side of the seal face 36 and 76 are sealed, that is between the machine outer side space A and the machine inner side space B are sealed.

The rotational ring 70 is a ring shape member having an opening which allows the rotational axis 2 to penetrate though the inside, and is a divisional type seal ring divided into two in the circumference direction. The rotational ring 70 comprises the first divisional part and the second divisional part as same as the stationary ring first divisional part 30a and the stationary ring second divisional part 30b of the stationary ring 30 as described in the above; and these are connected by contacting each end faces; thereby the rotational ring having a circular ring shape is formed.
Note that, the dividing faces of the rotational ring 70 are formed at the position off set by 90 degrees angles from the dividing faces of the rotational ring (mating ring) fixing holder 90, which will be described in below.

The rotational ring 70 is a ring shape member having a cross section of roughly L shape as same as the stationary ring 30. That is, it is not a seal ring with a simple cross section such as a rectangular shape or so, but it is a seal ring having the constitution in which the portion having different thickness in the radial direction is aligned in the axial direction. Specifically, the rotational ring 70 comprises the step part 77 at the approximately center in the axial direction of the inner peripheral face; and the machine inner side of the step part 77 is formed at the thicker area (the first area) 78 having the opening of the center with small diameter, further the machine outer side of the step part 77 is formed at the thinner area (the second area) 79 having a opening at the center with large diameter.

The inner peripheral face of the thicker area (the first area) 78 of the rotational ring 70 is placed at the position at extremely closely in contact or in the position in contact with the outer peripheral face 2a of the rotational axis 2.
The inner peripheral face of the thinner area (the second area) 79 of the rotational axis 70 is an embodiment having the O ring 66 placed via adaptor 65 at the machine inner side of the collar 60, in between the outer peripheral face 2a of the rotational axis 2.

At the machine inner side end face of the rotational ring 70, the stationary side seal portion 75 is formed which the part of the inner peripheral side is formed in a ridged form along the circumference direction in the predetermined width, and the end face thereof is formed at the stationary side seal face 76. The seal face 76 slides in close contact with the seal face 36 of the stationary ring 30 placed opposing thereto, and seals the inner peripheral side and the outer peripheral side thereof.
Note that, the rotational ring 70 is made of silicon carbide or carbon material.

At the outer peripheral of the rotational ring 70, the four circumference direction grooves 71 to 74 (the rotational ring first circumference direction groove 71 to the rotational ring fourth circumference direction 74) having an arc shape cross section for placing the O ring are formed. As for the rotational ring first circumference direction grooves 71 to 74, two circumference grooves of the rotational ring first circumference direction groove 71 and the rotational ring second circumference groove 72 are formed at the thicker area (the first area) 78 of the rotational ring 70; and two circumference grooves of the rotational ring third circumference direction groove 73 and the rotational ring fourth circumference direction groove 74 are formed at the thinner area (the second area) 79 of the rotational ring 70.

At each circumference direction grooves 71 to 74, the O rings 81 to 84 are placed. That is, the rotational ring first O ring 81 is placed at the rotational first circumference direction groove 71, the rotational ring second O ring 82 is placed at the rotational ring second circumference direction groove 72, the rotational ring third O ring 83 is placed at the rotational ring third circumference direction groove 73, and the rotational ring fourth O ring 84 is placed at the rotational ring fourth circumference groove 74.
The O ring having general size is used to each O rings 81 to 84. In other words, the size and the shape of the rotational ring first circumference direction groove 71 to the rotational ring fourth circumference direction groove 74 are defined so that the general size of the O ring can be used as the rotational ring first O ring 81 to the rotational ring fourth O ring 84.

At the further outer peripheral of the rotational ring 70 placed with the rotational ring first O ring 81 to the rotational ring fourth O ring 84, the rotational ring fixing holder 90 is provided.
The rotational ring fixing holder 90 is a circular ring shape member having a inner diameter which is approximately equal to the outer diameter of the rotational ring 70.
The rotational ring fixing holder 90 is also a divisional type rotational ring fixing holder which is divided into two in the circumference direction, as same as the stationary ring fixing holder 50 as described in the above. That is, the rotational ring fixing holder 90 comprises the rotational ring holder first divisional part and the second divisional part which is almost same as the stationary ring holder first divisional part 50a and the stationary ring fixing holder 50b (refer to Fig.3); and these are joined at the dividing faces by the first fastening bolt 95 and the second fastening bolt 96 (refer to Fig.1 and Fig.2), thereby the rotational ring fixing holder 90 of circular ring shape is formed.
Note that, the dividing faces of the rotational ring fixing holder 90 are formed at the position off set by 90 degrees angle from the dividing faces of the above mentioned rotational ring 70.

At the inner peripheral of the rotational ring fixing holder 90, the four circumference grooves having an arc shape cross section of the rotational ring holder first circumference direction groove 91 to rotational ring holder fourth circumference direction groove 94 are formed at the position corresponding to the rotational ring first circumference direction groove 71 to the rotational ring fourth circumference direction groove 74 of the rotational ring 70. The rotational ring holder first circumference direction groove 91 to the rotational ring holder fourth circumference direction groove 94 houses approximately half of the outer peripheral side of the rotational ring first O ring 81 to the rotational ring fourth O ring 84 placed at the rotational ring first circumference direction groove 71 to the rotational ring fourth circumference direction groove 74 of the rotational ring 70, and also presses the rotational ring first O ring 81 to the rotational ring fourth O ring 84 from the outer peripheral portion. Thereby, a strong pressing force acts on the rotational ring 70 from the outer peripheral side, and the first divisional part and the second divisional part of the rotational ring 70 are strongly in close contact, and thus the rotational ring 70 having a circular ring shape which the first divisional part and the second divisional part are in one body can be maintained.

As such, the rotational ring 70 and the rotational ring fixing holder 90 are joined integrally by each circumference direction grooves 71 to 74, 91 to 94 formed in an arc shape cross section and the O rings 81 to 84 placed thereto, so that each contact area between the O rings 81 to 84, and the rotational ring 70 and the rotational ring fixing holder 90 can be increased, and, as a result, the compression force applied to the rotational ring fixing holder 90 can be effectively and appropriately transferred and reflected as the tension force in full extent.
Also, by joining the rotational ring 70 and the rotational ring fixing holder 90 integrally in such constitution, it can be constituted that these are also integrally movable in the axial direction, and the position of the rotational ring 70 in the axial direction can be defined without having a special system.

Also, the circumference direction groove of the rotational ring 70 and the rotational ring fixing holder 90 are formed at least one, and preferably two or more at each portion having different thickness in the radial direction of the rotational ring 70. Therefore, the O ring present in between the rotational ring 70 and the rotational ring fixing holder 90 are placed at least one and preferably two or more at each portion having different thickness in the radial direction of the rotational ring 70. In the mechanical seal device 1 of the present embodiment, each two of the circumference direction groove 71, 72 of the rotational ring 70 and the circumference grooves 91, 92 of the rotational ring fixing holder 50, and the circumference direction grooves 73, 74 of the rotational ring 70 and the circumference grooves 93, 94 of the rotational ring fixing holder 50 are formed in correspondence with the thicker area (the first area) 78 and the thinner area (the second area) 79 which is the portion having a different thickness in the radial direction of the rotational ring 70. Each two of the O rings 81, 82 and 83, 84 are placed at each surrounding of the thicker area (the first area) 78 and the thinner area (the second area) 79 which is the portion having a different thickness in the radial direction of the rotational ring 70.

As such, by forming the circumference direction grooves to the rotational ring 70 and the rotational ring fixing holder 50 in correspondence with the portion having a different thickness in the radial direction of the rotational ring 70, and by placing the O rings in between, even when the rotational ring 70 is complicatedly deformed due to the different thickness in the radial direction, the O rings placed at each portion allows to provide an appropriate tension force to the portion (area), and thus the deformation can be appropriately suppressed or prevented.

Also, in the rotational ring fixing holder 90, the fastening bolts 95, 96 which joins the first divisional part and the second divisional part 50b are used in at least one or preferably at two or more portion (area) having different thickness in the radial direction of the rotational ring 70. In the mechanical seal device 1 of the present embodiment, in correspondence with the thicker area (the first area) 78 and the thinner area (the second area) 89 having a different thickness in the radial direction of the rotational ring 70, each one place of the first fastening bolt 95 and the second fastening bolt 96 are used.

As such, by joining each divisional part of the rotational ring fixing holder 90 using each separate fastening bolt 95, 96 at the place corresponding to the portion having different thickness in the radial direction of the rotational ring 70, the appropriate tension force can be applied to each portion (area) against the deformation due to the different thickness in the radial direction of the rotational ring 70, thus the rotational ring 70 can be maintained in a ring shape appropriately.

Also, in the rotational ring fixing holder 90 of the mechanical seal device 1 of the present embodiment, each end face of the first divisional part and the second divisional part are not in close contact, as shown in Fig.3, the space 50e and 50f between the stationary ring holder first divisional part 50a of the stationary ring fixing holder 50 and the stationary ring first divisional part 50b, it is joined so that a slight space is formed. In other words, the circumference length of the first divisional part and the second divisional part of the rotational ring holder is defined so that such space is formed. By taking such constitution, each bolt fastening force of the fastening bolt 95, 96 allows to control the pressing force and the tension force acting on the outer peripheral of the rotational ring 70.

At the rotational ring fixing holder 90, the whirl-stop pin attachment hole 97 is formed in which the whirl-stop pin 64 is inserted, as mentioned in the above. The tip part of the whirl-stop pin 64 inserted in the whirl-stop pin attachment hole 97 is fitted by inserting into the whirl-stop pin attachment hole 63 formed at the machine inner side end face of the collar 60. Thereby, the rotational ring fixing holder 90 and the rotational ring 70 integrated with the rotational ring fixing holder 90 are fixed against the collar 60 in the circumference direction.
Note that, the end faces of the machine outer side of the rotational ring (mating ring) 70 and the rotational ring fixing holder 90 are made in contact with the end face of the machine inner side of the collar 60, and the axial direction positions of the rotational ring (mating ring) 70 and the rotational ring fixing holder 90 are defined.

In the mechanical seal device (1) of the present embodiment having such constitution, the seal ring (the stationary ring 30, the rotational ring 70) is joined in a movable manner as one body in the axial direction and the circumference direction against the holder (the stationary ring fixing holder 50 and the rotational ring fixing holder 90) placed at the outer peripheral of said seal ring and also strongly pressed from the outer peripheral side; due to the circumference direction grooves (31 to 34, 71 to 74) formed at the outer peripheral face of the seal ring, the circumference direction grooves (51 to 54, 91 to 94) formed at the inner peripheral face of the holder, and the O rings (41 to 44, 81 to 88) placed in between the circumference direction grooves thereof.
Therefore, the axial direction position and the circumference direction position can be appropriately controlled by such simple constitution, and further the joined dividing faces can be strongly maintained, thus even if the sealing fluid is a high pressure fluid or so, an appropriate sealing ability can be exhibited.

Also, as described in above, the force of the O ring also acts on each divisional part of the seal ring against the axial direction, thus the shifting in the axial direction can be prevented, and the connecting part of the seal face can be maintained always accurately in flat.

Also, in the mechanical seal device (1) of the present embodiment, the joining of the dividing faces of the divided seal ring can be maintained strongly, thereby the divisional type mechanical seal can be realized as the outside type mechanical seal. Therefore, the seal cover or so are unnecessary and the constitution is relatively simple, and the divisional type mechanical seal possible to make compact can be provided.

Also, in the mechanical seal device (1) of the present embodiment, the above mentioned circumference direction grooves are placed in correspondence with the portion having a different thickness in the radial direction of the seal ring, and the O rings are placed to press from the outside, thus even if the seal ring is complicatedly deformed due to the different thickness in the radial direction, the O rings placed in each portion (area) can provide appropriate tension force against the portion (area) thereof, hence the deformation can be suppressed or prevented appropriately. The seal ring deforms due to the receiving pressure, the temperature or so of the sliding heat or so, and this deformation is influenced by the shape of the seal ring, thus there may be the different deformation or complicated deformation at the portion having different thickness in the radial direction; however the mechanical seal device (1) of the present embodiment can deal with such deformation as well.

Also, in the mechanical seal device (1) of the present embodiment, when joining the dividing faces of the divisional type holder, the portion having different thickness in the radial direction of the seal ring is fastened by each individual fastening bolt, thus the appropriate tension force can be provided to each portion (area) against to the deformation due to the different thickness in the radial direction of the seal ring, further the seal ring can be maintained in ring shape appropriately.

Also, in the mechanical seal device (1) of the present embodiment, at the dividing faces of the divisional type holder, each end face of the first divisional part and the second divisional part respectively are not in close contact, and it is joined so that slight space is formed. Therefore, due to each fastening force of the fastening bolt, the pressing force and the tension force acting on the outer peripheral of the seal ring which is placed at the inner peripheral side can be controlled.

Also, in the mechanical seal device (1) of the present embodiment, as the O ring placed in between the seal ring and the holder, an O ring having an usual size is used. Therefore, the time for managing the O ring and the mold for producing thereof can be omitted.
Also, this O ring is placed at the machine outer side, and does not contact with the sealing fluid, thus it does not depend on the type of the sealing fluid (the corrosive chemical liquid, or the slurry liquid), hence it is not necessary to use a special O ring, and O ring which is usually used can be used. Thus, improvement of the reliability, and the cost reduction can be accomplished.

Note that the above mentioned embodiment is described to make easier to understand the present invention and it is not to be limited thereto. Each element disclosed in the present embodiment includes all the design modifications and the equivalents which belong to the technical scope of the present invention; and arbitrary and suitable various modifications are possible.

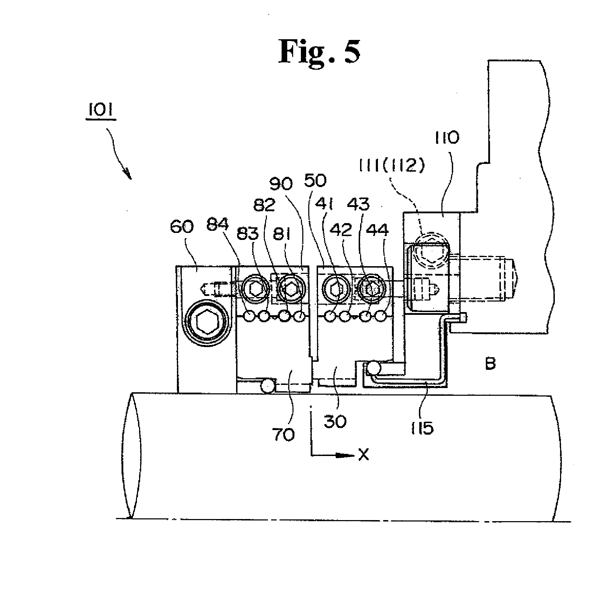

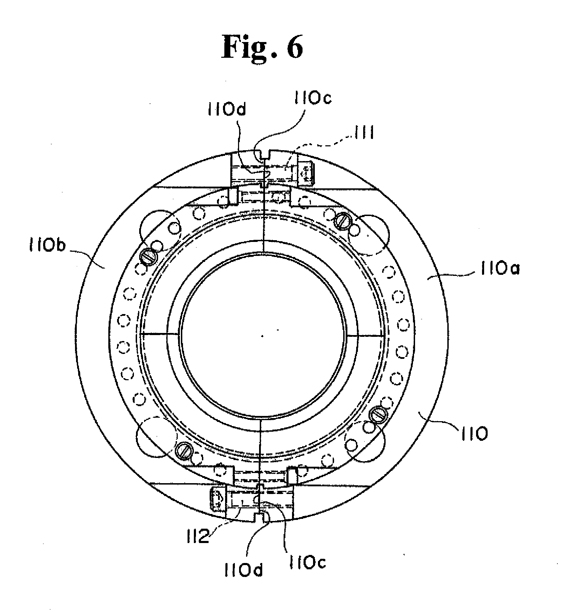

For example, in the above mentioned embodiment, as the flange 10 for mounting the mechanical seal device 1 to the casing 6, the circular ring shape member having a circular opening at the center was used. However, the flange 10 can be made into a constitution of divisional type flange which is divided into two in the circumference direction. The mechanical seal device having such constitution, that is the mechanical seal device 101 applying the divisional type flange will be described by referring to Fig.5 and 6.

Fig.5 is a figure showing the constitution of the mechanical seal device 101 applying the divisional type flange as other embodiment, and Fig.6 is an axial cross sectional figure at X position of Fig.5.

The basic constitution of the mechanical seal device 101 shown in Fig.5 is same as the mechanical seal device 1 as described in the above. That is, the mechanical seal device 101 is a divisional type mechanical seal device of the outside type, and comprises a flange 110, a stationary ring (seal ring) 30, O rings 41 to 44, the stationary ring fixing holder 50, a collar 60, a rotational ring (mating ring) 70, O rings 81 to 84, and the rotational ring fixing holder 90, as the main constitution parts. In the mechanical seal device 101, the constitution, the function, and the effect of each portion other flange 110 are the same as that of each portion corresponding to the references described by using same references in the above embodiment.

In the mechanical seal device 101, the flange 110 is, as shown in Fig.6, comprises the flange first divisional part 110a and the flange second divisional part 110b. These flange first divisional part 110a and flange second divisional part 110b makes the dividing faces 110c, 110d in contact and joined by fastening bolt (the flange fastening bolt) 111 and 112; thereby the circular ring shape flange 110 is formed. The flange 110 formed in the complete circular ring shape have the exactly the same function as the ring shape flange 10 described in the above, and is used as same as the ring shape 10 described in above.

The connecting part of the flange first divisional portion 110a and the flange second divisional part 110b, that is at the inner peripheral side of the connecting part between the dividing faces 110c and the dividing faces 110d are provided with the packing 115 having a cross section of roughly L shape, as shown in Fig.5. Due to this packing 115, the leakage from the dividing faces (the connecting part between the flange first part 110a and the flange second part 110b) of the flange 110 of the sealing fluid of the machine inner side space B are prevented. Note that, the dividing faces of the flange 110 are at two places, hence two packing 115 are placed.

In such mechanical seal device 101 applying the divisional type flange 110, there is no need to divide the machine even when exchanging the flange, hence the maintenance is easy and it is possible to use and operate the machine effectively.
The mechanical seal device according to the present invention may be used in such constitution.

### INDUSTRIAL APPLICABILITY

The present invention can be applied as the seal device in the arbitrary fluid transport machine used in industries such as chemical, petroleum, iron manufactures, paper/pulp, and pharmaceuticals or so and other general industries, and can be used as other arbitrary machines or so.

## Claims

1. A divisional type and outside type mechanical seal device comprising a stationary seal ring and a rotational seal ring; wherein
at least one of said stationary seal ring and said rotational seal ring is a seal ring having a cross sectional shape changing a radial direction thickness in the axial direction,
said mechanical seal device comprises
one or more O rings placed at an outer peripheral face of each area in the axial direction having different thickness in the radial direction of the seal ring having a different thickness in said radial direction, and
a holder placed at outer peripheral of said seal ring where said O ring is placed and presses said seal ring to a radial direction inner side via said O ring.

2. The mechanical seal device as set forth in claim 1, wherein said holder is a divisional type holder divided into plurality of divisional parts along the circumference direction, and connecting means to form said holder by sequentially joining one or more of said divisional parts are placed at an outer peripheral side of said each area in the axial direction having a different thickness in the radial direction of the seal ring having a different thickness in said radial direction.

3. The mechanical seal device as set forth in claim 1, wherein said holder is a divisional type divided into plurality of divisional parts, and under a condition that said holder is sequentially joined by a connecting means, a space controllable by said connecting means are formed in between said divisional parts.

4. The mechanical seal device as set forth in claim 1, wherein one or more of circumference grooves having an arc shape cross section are formed at an outer peripheral of said each area in the axial direction having different thickness in the radial direction of the seal ring changing the thickness in radial direction, and one or more O rings placed at said each area are placed by fitting to said circumference direction grooves.

5. The mechanical seal direction as set forth in claim 1, wherein at inner peripheral face of said holder, one or more circumference grooves having a arc shape cross section are formed at an area corresponding to an outer peripheral of an area in the axial direction having different thickness in an radial direction of seal ring having different thickness in said radial direction, and one ore more O rings placed at each said area are placed by fitting to said circumference grooves.
